# EUROPÄISCHE PATENTSCHRIFT

(11) **EP 2 155 851 B1**
(45) Veröffentlichungstag und Bekanntmachung des Hinweises auf die Patenterteilung: **25.06.2014**
(21) Anmeldenummer: 08760390.8
(22) Anmeldetag: 03.06.2008
(51) Int. Cl.: C12H 1/04, B01J 20/26, C12H 1/056

(54) **VERWENDUNG EINES N-VINYLIMIDAZOL-POLYMERISATS ZUR VERBESSERUNG DER WERTBESTIMMENDEN EIGENSCHAFTEN VON BIOLOGISCHEN FERMENTIERTEN LÖSUNGEN**
USE OF N-VINYLIMIDAZOLE POLYMERS TO IMPROVE THE VALUE-DETERMINING PROPERTIES OF BIOLOGIC FERMENTED SOLUTIONS
UTILISATION D'UN PRODUIT DE POLYMÉRISATION DE N-VINYLIMIDAZOLE POUR AMÉLIORER LES PROPRIÉTÉS DÉTERMINANT LES VALEURS DE SOLUTIONS BIOLOGIQUES FERMENTÉES

(30) Priorität: 06.06.2007 EP 07109731
(43) Veröffentlichungstag der Anmeldung: 24.02.2010
(73) Patentinhaber: BASF SE, 67056 Ludwigshafen (DE)
(72) Erfinder: SCHMID, Nikolaj, 68161 Mannheim (DE); SPIKA, Gero, 67117 Limburgerhof (DE); JARON, Milan, 821 09 Bratislava (SK)
(86) Internationale Anmeldenummer: PCT/EP2008/056806
(87) Internationale Veröffentlichungsnummer: WO 2008/148743

(56) Entgegenhaltungen:
- EP-A- 0 438 713
- EP-A- 1 318 159
- WO-A-2004/045571
- DE-A1- 4 328 669
- DE-A1- 19 547 761
- "Divergan HM Polymer for Heavy Metal Reduction" INTERNET CITATION, [Online] Seiten 1-6, XP002494278 Gefunden im Internet: URL:http://www.basf.com.mx/humannutrition/ pdfs/diverganhmpolymer.pdf> [gefunden am 2008-09-02]

## Beschreibung

Die Patentanmeldung betrifft die Verwendung eines quervernetzten N-Vinylimidazol-Polymerisats sowie ein Verfahren zur Verbesserung der Geschmacksstabilität von biologischen fermentierten Lösungen, wobei als biologisch fermentierte Lösung Bier oder bierähnliche Getränke behandelt werden. durch Behandlung mit einem quervernetzten Polymerisat auf Basis eines N-Vinylimidazols.

Durch den Einsatz des quervernetzten N-Vinylimidazol-Polymerisats werden biologisch fermentierte Lösungen in ihrem Geschmacks-stabilität verbessert.

Der Prozess der Herstellung von Bier verläuft im wesentlichen wie folgt: Würzenbereitung, Gärung, Lagerung, Filtration, Stabilisierung, Abfüllung. Die durch Röstverlahren gewonnene Würze wird in Gegenwart von Bierhefen vergoren, woran sich eine Lagerung für einen bestimmten Zeltraum, wobei eine Nachgärung stattfindet, anschliesst. Danach erfolgt üblicherweise eine Klärung des Bieres, um grobe Partikel zu entfernen, woran sich eine üblicherweise physikalische-chemische Stabilisierung anschliesst, bei der Polyphenole und Tannoide sowie Eiweißstoffe entfernt werden. Die Klärung kann beispielsweise durch Zentrifugation, Flotation oder Filtration erfolgen. Diese Trenntechniken können einzeln oder hintereinander durchgeführt werden. Das solchermas-sen stabilisierte Fertigbier oder Verkaufsbier wird dann der Abfüllung zugeführt. Zur Herstellung von Bieren und ähnlichen alkoholischen Getränken siehe auch Römpp Chemielexikon, 9. Auflage. Bd. 1, S. 108-111, Georg Thieme Verlag, Stuttgart.

Durch die Stoffwechselaktivität der Hefe werden im Verlauf der Gärung neben Ethanol eine Vielzahl von aromaintensiven, leichtflüchtigen Substanzen gebildet. Diese Gärungsnebenprodukte sind in der Hauptsache Alkohole und Ester.

Die Qualität von biologisch fermentierten Lösungen wie beispielsweise Bier und bierähnliche Getränke ist gekennzeichnet durch die Summe der wertbestimmenden Eigenschaften. Bei den wertbestimmenden Eigenschaften unterscheidet man Geruchs-, Geschmacks-, Schaum-, mikrobiologischen und chemisch-physikalischen Stabilität der biologisch fermentierten Lösungen sowie deren Drinkabililty. Drinkability bezeichent ein Atribut eines Getränks durch seinen sortentypischen Geschmack auch für den zukünftigen Konsum attraktiv zu sein ("Markentreue").

Diese wertbestimmenden Eigenschaften sollten sich während der Lagerung und des Transportes nicht nachteilig verändern. Durch verschiedene Parameter werden die Eigenschaften während der Lagerung Jedoch verändern. Dazu gehören beispielsweise autoxidative Veränderungen, Energieeintrag durch Licht oder Transport und auch der Anteil an bestimmten nach der Gärung vorhandenen Inhaltsstoffen wie beilspielsweise-Fettsäuren, Zucker oder Aminosäuren.

Zur physikalischen Klärung des Bieres werden häufig Mineralstoffe wie Kieselgur, Perlite oder Bentonit verwendet. Zur Entfernung von Polyphenolen kann beispielsweise quervernetztes Polyvinylpyrrolidon verwendet werden. Zur Entfernung von Proteinen wird auch Silica eingesetzt.
Es ist auch bekannt, den Filtrationsschritt mit dem Stabilisierungsschritt zu kombinieren, indem Filterhilfsmittel eingesetzt werde, die gleichzeitig eine mechanische Abtrennung von Hefezellen und eine Stabilisierung ermöglichen.

In der EP-A 88964 ist ein Verfahren zur Herstellung von in Wasser unlöslichen und nur wenig quellbaren Polymeren aus basischen N-Vinylheterocyclen beschrieben, die zur Herstellung von Komplexen mit Übergangsmetallen verwendet werden können.

Gemäß EP-A-4 38 713 werden Polymerisate auf Basis von basischen Vinylheterocyclen zur Entfernung von Schwermetallen aus Wein und weinähnlichen Getränken eingesetzt. Die Polymerisate sollen nach der Behandlung mit verdünnten Mineralsäuren regeneriert werden können.

In der EP-A 781 787 ist die Verwendung von in Wasser unlöslichen und nur wenig quellbaren Polymerisaten aus basischen N-Vinylheterocyclen zur Herstellung von Komplexen mit Schwermetallionen beschrieben. Die Komplexe mit Schwermetallionen sollen zur Entfernung von schwefelhaltigen Verbindungen aus Wein und weinähnlichen Getränken dienen.

Aus der EP-A 642 521 ist bekannt, Aluminiumionen aus Getränken wie Bier, Wein, weinähnlichen Getränken oder Fruchtsaft zu entfernen. Allerdings bezieht sich die darin beschriebene Behandlung von Bier auf ein fertiges Verkaufsbier, dass vorher bereits einer physikalisch-chemischen Stabilisierung unterzogen worden war. Durch die in diesem Dokument beschriebene Behandlung wurde das sortentyplsche Aroma nicht beeinflusst.

DE 43 28 669 A1 offenbart ein Verfahren zur Entfernung von Alumnionionen aus Getränken. Es wird ein verkaufsfählges Bier behandelt, an dem bereits alle Prozesse zur Aromenbildung abgeschlossen sind.

WO 2004/045571 A offenbart die Verwendung von basischen Amingruppen enthaltenden Polymerisaten in kosmetischen, dermatologischen oder pharmazeutischen Formulierungen. Die allgemeine Verwendung von Divergan®-Polymere als Filterhilfsmittel für Bier, Wein oder Fruchtsäfte wird beschrieben.

Der Erfindung lag daher die Aufgabe zugrunde, ein verbessertes Verfahren zur Verbesserung der wertbestimmenden Eigenschaften, insbesondere des Aromaprofils, von Bier und bierähnlichen Getränken zu entwickeln. Aufgabe war es vor allem, von vorneherein für ein verbessertes Aromaprofil zu sorgen.

Diese Aufgabe wird gelöst durch ein Verfahren zur Verbesserung der Geschmacksstabilität von biologischen fermentierten Lösungen, wobei als biologisch fermentierte Lösung Bier oder bierähnliche Getränke behandelt werden, welches dadurch gekennzeichnet ist, dass man die biologisch fermentierte Lösung nach der Fermentation zu einem Zeitpunkt, an dem die Aromenbildung nochstattfindet, pro 100 Liter mit 1 bis 3000 g eines Polymerisates aus 50-99,5 Gew.% N-Vinylimidazol und 0 bis 49,5 Gew.% eines anderen copolymerisierbaren Monomeren einpolymerisiert enthält und unter Ausschluß von Sauerstoff und von Polymerisations-initiatoren sowie in Gegenwart von 0,5 bis 10 Gew. %, bezogen auf die Monomeren, eines Vernetzers hergestellt wird, behandelt.

Gegenstand der Erfindung ist auch die Verwendung eines N-Vinylimidazol-Polymerisats zur Verbesserung der Geschmacksstabilität.

Biologisch fermentierte Flüssigkeiten sind erfindungsgemäß insbesondere Bier und bierähnliche Getränke. Als Bierprodukt wird eine Bierzwischenstufe bezeichnet, die kein Fertig- oder Verkaufsbier darstellt. Das Bierprodukt ist noch keiner Klärung oder physikalisch-chemischen Stabilisierung zugeführt worden.

Die Behandlung nach dem erfindungsgemäßen Verfahren kann ein Unfiltrat direkt nach der Gärung und Nachgärung, also vor der Klärung und/oder physikalisch-chemischen Stabilisierung erfolgen, behandelt werden. Es kann sich auch empfehlen, dass erfindungsgemäß zu verwendende Polymerisat in den vorgeschalteten Produktionsschritten wie der Wasserbehandlung, Maischen. Würzeherstellung oder Gärung einzusetzen. Gemäß einer weiteren Ausführungsform kann die Behandlung zusammen mit dem ersten Filtrationsschritt nach der Gärung und Nachgärung erfolgen.

Die Menge an verwendetem Polymerisat beträgt 1 bis 3000, bevorzugt 50 g bis200, besonders bevorzugt 40 bis 80 g pro 100 l.

Das N-Vinylimidazol-Polymerisat kann als Feststoff zugegeben werden oder in Form einer wässrigen Suspension zudosiert werden. Der Feststoffgehalt der Suspension kann 1 bis 30, insbesondere 5 bis 10 Gew.% betragen.

Die Herstellung der erfindungsgemäß eingesetzten N-Vinyl-Polymerisate ist an sich bekannt und in der EP-A 88964, der EP-A 438713 und der EP-A 642521 ausführlich beschrieben und es wird diesbezüglich hiermit ausdrücklich auf die Offenbarung der genannten Schriften Bezug genommen.

Bevorzugt enthält das verwendete N-Vinyl-Polymerisat 70 bis 99.5 Gew.-% N-Vinylimidazol, 0 bis 29.5 Gew.-% des copolymerisierbaren Monomeren und 0.5 bis 10 Gew.-% des Vernetzers.

Bevorzugt werden weiterhin Copolymere aus 50 bis 99.5 Gew.% N-Vinylimidazol und N-Vinylpyrrolidon als Comonomer. Als Vernetzer kommt bevorzugt N, N'-Divinylimidazolidin-2-on Betracht.

Ganz besonders bevorzugt ist ein Polymerisat aus 90 Gew.-% N-Vinylimidazol, 7 Gew.-% N-Vinylpyrrolidon und 3 Gew.-% N,N'-Divinylimidazolin-2-on.

Die Angaben in Gew.-% beziehen sich dabei auf die Gesamtmenge an Monomeren und Vernetzer.

Die erfindungsgemäß verwendetenen N-Vinyl-Polymerisate sind zum Teil kommerziell erhältlich, beispielsweise als Divergan® HM der Firma BASF.

Verfahrenstechisch kann die erfindungstechnische Behandlung wie eine Filtration durchgeführt werden. Das Polymerisat kann beispielsweise wie in der Patentanmeldung DE 19547761 A1 als Schüttgut für die Anschwemmfiltration verwendet werden. Das polymerisiertes Vinylheterocyclus kann sowohl als sogenannte Voranschwemmschicht oder bei einer laufenden Dosage bei der Anschwemmfiltration zum Einsatz kommen.

Ferner ist es möglich das Polymerisat in verschiedenen Formen in einer Matrix einzuarbeiten, beispielsweise in Filterkerzen, Filtermodulen, Filterschichten, Membranen oder lonentauschersäulen.
Die oben beschriebene Matrix kann aus den folgenden Materialien bestehen: synthetische Polymere wie Polyethylen, Polyproylen, Polybutylen, Polyamid, Polystyrol, Polyethersulfone oder Polyester, Cellulosen, anorganischen Materialien wie Kieselgur, Perlite, Asbest, Glas, Aluminiumoxide, Siliciumoxide, Aktivkohle und/oder Sand, oder Harze.

Bei der Einarbeitung in eine Matrix beträgt das Mengenverhältnis von N-Vinylimdazol-Polymerisat zu Matrixmaterialien üblicherweise 1: 10 bis1:1.

Die erfindungsgemäß behandelten Roh-Bierprodukte werden hinsichtlich ihrer Geschmackstabilität beurteilt.

Zur Beurteilung des Geschmackstabilität sind grundsätzlich zwei Methoden zu unterscheiden:
1. Die analytische Beurteilung mittels Gaschromatographie, HPLC, and ESR und
2. die sensorische Beurteilung durch verschiedenen Verkostungsschemata wie z.B. Verkostung nach DLG oder nach Eichhorn.

Folgende Analysenmethoden können bei der Messung der Geschmacksstabilität zum Einsatz kommen:
1. Höhere aliphatische Alkohole und leichflüchtige Ester
2. Bieraromastoffe (Alkohole, Ester, Säuren)
3. Alterungsindikatoren (Wärme-, Sauerstoffindikatoren, Alterungskomponenten)
4. Stabilitätsindex
5. Verkostung nach DLG
6. Verkostung nach Eichhorn

Weiterhin kann auch die chemisch-physikalischen Stabilität über die Bestimmung des Gehalts an Tannoiden, Proteine und Gesamtpolyphenolen untersucht werden.

Durch die erfindungsgemäße Verwendung eines N-Vinylimidazol-Polymerisats ist es möglich, auf einfache Weise eine Stabilisierung des rohen fermentierten Produkts zu erzielen, die zur Folge hat, dass später bei Lagerung und Transport des fertigen Verkaufsprodukts die Bildung von Alterungsstoffen zurückgedrängt wird. Im Gegensatz zu den im Stand der Technik beschriebenen Verfahren, die nur auf eine Klärung oder Nachbehandlung eines fertigen Getränks abzielen, also zu einem Zeitpunkt an dem die Aromabildung im wesentlichen abgeschlossen ist, greift das erfindungsgemäße Verfahren zu einem Zeitpunkt, zu dem aufgrund der hochkomplexen chemischen Zusammensetzung und der noch anwesenden Hefen noch eine Aromabildung stattfindet. Durch die Adsorption von Schwermetallionen wie Kupfer oder Eisen oder von Aluminiumionen im Unfiltrat kann das Aromaprofil beeinflusst werden. Durch die Adsorption von phenolischen Komponenten wie beispielsweise 3,4-Dihydroxyzimtsäure, können diese Verbindungen einer Umwandlung durch enzymatische Reaktionen entzogen und damit das Aromaprofil positiv beeinflusst werden. Das erfindungsgemäße Verfahren ersetzt nicht die spätere Filtration mittels eines Filterhilfsmittels zur Entfernung gröberer Partikel oder Zellreste und auch nicht die Stabilisierung mit z.B. Silica, vernetzten Polyvinylpyrrolidonen und ähnlichen Substanzen. Erfindungsgemäß wird insbesondere die Ausbildung der Aromastoffe und der für eine Alterungsstabilität hinsichtlich der typischen Alterungsindikatoren wichtigen chemischen Zusammensetzung beeinflusst.

Es war für den Fachmann überraschend, dass mit einer Behandlung direkt nach der Gärung später auch eine größere Stabilität des fertigen Produkts hinsichtlich der wertbestimmenden Eigenschaften erzielt werden kann.

### Beispiele

Die in den folgenden Beispielen genannten Prüfvorschriften beziehen sich auf die bei der TU München, Lehrstuhl für Technologie der Brauerei I, Weihenstephan, für jedermann auf Anfrage erhältlichen Analysenvorschriften, die auch den Vorschriften der Mitteleuropäischen Brauanalysen-Komission MEBAK entsprechen.

Die Behandlung erfolgte in einer industriellen Pilot-Anlage.Behandelt wurden 50 l eines Bier-Unfiltrats vom Typ eines Pilsner-Bieres. Dabei wurden 20 g, 40 g oder 80 g Diver-gan HM pro 100 l Unfiltrat bei der Filtration mit Kieselguhr (Becogur®) zudosiert.

### Analytische Beurteilung

Bestimmung der Alterungsindikatoren
Prüfverfahren Nr. GC007/96
Ergebnisse siehe Tabelle 1
Höhere aliphatische Alkohole und leichtflüchtige Ester
Prüfverfahren Nr. GC008/96
Ergebnisse siehe Tabelle 2
Sensorische Beurteilung
Verkostung nach DLG

Das DLG-Verkostungsschema beurteilt die Biere in einer Fünf-Punkte-Skala, wobei 5 rein und ohne Fehlgeschmack bedeutet. Es bietet sich an die Bewertung in 0,5-Punkte-Schritten vorzunehmen.

### Alterungsverkostung nach Eichhorn

Eichhorn entwarf ein Verkostungsschema zur sensorischen Beurteilung gealterter Biere. Bei diesem Schema wird ausschließlich die Frische beziehungsweise der Alterungsgrad eines Bieres beurteilt. Die Kriterien orientieren sich dabei an denen des DLG-Schemas, wobei nur Geruch, Geschmack und die Qualität der Bittere bewertet werden. Als Skala zur Bewertung des Aiterungsgeschmacks können Noten zwischen 1 und 4 gegeben werden. Dabei steht die Note 1 für uneingeschränkt frisch und 4 für extrem gealtert. Weiterhin wird durch die Verkoster die Akzeptanz in Prozent beurteilt. Beispielsweise bedeutet ein Akzeptanzwert von 20 %, dass nur jeder 5. Verkoster dieses Bier akzeptieren würde. Im Vorfeld ist es unerlässlich, das Verkosterpanel auf Alterungsgeschmack zu trainieren.

Zur Vorhersage der Geschmackstabilität werden die Biere forciert gealtert. Die Proben werden hierzu 24 Stunden geschüttelt, um den Vertriebsweg zu simulieren und danach 4 Tage bei 40 °C dunkel gelagert. Die Verkostung erfolgt frisch gegen forciert. Zur sensorischen Beurteilung der Geschmacksstabilität wird nach dem 5-Punkte-Schema der DLG verkostet und zusätzlich wird der Alterungszustand nach Eichhorn mit einer 4-Punkte-Skalierung bewertet. Alternativ zur forcierten Alterung können und sollten natürlich gelagerte Biere (Rückstellproben) regelmäßig auf Alterung hin verkostet werden,

Die Ergebnisse von DLG-Verkostung und Alterungsverkostung sind in er nachstehenden Tabelle dargestellt

### Verkostung nach DLG:

Bewertung in Helbnotenschritten von 1 bis 5
Bitte Aromaeindruck angeben!

| Nr. | Probe | Geruch | | Trunk | | Vollm. | Rezenz | Bittere |
|---|---|---|---|---|---|---|---|---|
| A | A frisch | 4,0 | | 4,5 | | 4,0 | 4,0 | 4,0 |
| B | A forciert | 3,0 | | 3,0 | | 4,0 | 4,0 | 3,5 |
| C | B frisch | 4,0 | | 4,0 | | 4,0 | 4,0 | 4,0 |
| D | B forciert | 2,5 | | 2,5 | | 3,5 | 4,0 | 3,5 |

### Alterungsverkostung:

**Tabelle: Verkostung nach DLG und Alterungsverkostung nach Eichhorn**

| | | | | | | | | | | | | |
|---|---|---|---|---|---|---|---|---|---|---|---|---|
| | 1 = frisch | | | | | | Die Akzeptanz bezieht sich nur auf die alterung des Bieres I | | | | | |
| | 2 = leicht gealtert | | | | | | | | | | | |
| | 3 = stark gealten | | | | | | | | | | | |
| | 4 = extrem gealtert | | | | | | | | | | | |

| **Nr.** | **Probe** | **Geruch** | | **Trunk** | | **Bittere** | **Akzeptanz [%]** | | | | | |
|---|---|---|---|---|---|---|---|---|---|---|---|---|
| | | | | | | | 100 | 80 | 60 | 40 | 20 | 0 |
| A | A frisch | 1,0 | | 1,0 | | 1,0 | × | | | | | |
| B | A forciert | 2,0 | | 2,5 | | 2,0 | | | × | | | |
| C | B frisch | 1,0 | | 1,0 | | 1,0 | × | | | | | |
| D | B forciert | 3,0 | | 3,0 | | 2,5 | | | | | × | |

**Tabelle 1: Alterungsindikatoren**

| Alterungsindikatoren in µg/l | 20 g/hl | | 40 g/hl | | 80 g/hl | | forciert Becogur Filtrat | forciert Eisengur Filtrat | Unfiltrat frisch |
|---|---|---|---|---|---|---|---|---|---|
| | frisch | forciert | frisch | forciert | frisch | forciert | | | |
| 3-Methylbutanal | 6,7 | 13 | 7,2 | 10 | 6,4 | 9,0 | 8,7 | 10 | 5,9 |
| 2-Furfural | 3,1 | 55 | Sp. | 36 | Sp. | 24 | 122 | 113 | Sp. |
| Methylfurfural | 3,9 | 5,3 | 4,1 | 5,3 | 4,1 | 5,7 | 5,4 | 5,2 | 4,2 |
| Benzaldehyd | 1,0 | 1,1 | Sp. | 1,2 | 0,7 | 0,7 | 1,8 | 1,4 | Sp. |
| 2-Phenylethanal | 5,0 | 9,5 | 4,0 | 6,2 | 3,5 | 6,2 | 10 | 10 | 4,4 |
| Bernsteinsäurediethylester | 0,7 | 1,0 | Sp. | 1,8 | Sp. | 1,2 | 2,2 | 1,9 | 1,0 |
| Nicotinsäureethylester | 6,1 | 11 | 4,2 | 11 | 4,9 | 12 | 9,9 | 8,7 | 4,3 |
| Phenylessigsäureethylester | 0,8 | 0,8 | Sp. | 1,1 | 0,8 | 0,9 | 1,1 | 0,9 | 0,7 |
| 2-Acetylfuran | 1,2 | 4,7 | Sp. | 5,3 | SP. | 3,5 | 10 | 8,8 | Sp. |
| 2-Propionylfuran | Sp. | Sp. | Sp. | Sp. | Sp. | Sp. | Sp. | Sp. | Sp. |
| AGamma-Nonalacton | 21 | 25 | 22 | 26 | 20 | 22 | 27 | 23 | 23 |
| Σ Wärmeindikatoren | 24 | 80 | 22 | 62 | 20 | 47 | 149 | 136 | 23 |
| Σ Sauerstoffindikatoren | 13 | 23 | 11 | 18 | 11 | 16 | 20 | 21 | 10 |
| Σ Alterungskomponenten | 43 | 115 | 37 | 93 | 36 | 74 | 189 | 174 | 39 |

**Tabelle 2: Höhere aliphatische Alkohole und leichtflüchtige Ester**

| Konzentrationen in mg/l | Filtrat 20 g | Filtrat 40g | Filtrat 80g | Unfiltrat |
|---|---|---|---|---|
| Acetaldehyd | 5,0 | 5,3 | 4,7 | 4,1 |
| Propanol-1 | 6,4 | 6,1 | 5,9 | 6,0 |
| Ethylacetat | 16 | 21 | 18 | 17 |
| 2-Methylpropanol | 6,1 | 5,8 | 5,6 | 5,6 |
| 3- Methylbutanol | 22 | 21 | 30 | 29 |
| 2-Methylbutanol | 4,5 | 4,3 | 8,2 | 8,0 |
| 2-Methylpropylacetat | n.n. | Sp. | n.n. | n.n. |
| Buttersäureethylester | 0,1 | 0,1 | 0,1 | 0,1 |
| 3-Methylbutylacetat | 1,2 | 1,4 | 1,2 | 1,2 |
| 2-Methylbutylacetat | 0,1 | 0,1 | 0,1 | 0,1 |
| Hexansäureethylester | 0,1 | 0,2 | 0,1 | 0,1 |

## Patentansprüche

1. Verfahren zur Verbesserung der Geschmacksstabilität von biologischen fermentierten Lösungen, wobei als biologisch fermentierte Lösung Bier oder bierähnliche Getränke behandelt werden, **dadurch gekennzeichnet, dass** man die biologisch fermentierte Lösung nach der Fermentation zu einem Zeitpunkt, an dem die Aromenbildung noch stattfindet, pro 100 Liter mit 1 bis 3000g eines Polymerisates behandelt, das 50-99,5 Gew.% NVinylimidazol und 0 bis 49,5 Gew.% eines anderen copolymerisierbaren Monomeren ein-polymerisiert enthält und unter Ausschluß von Sauerstoff und von Polymerisationsinitiato-ren sowie in Gegenwart von 0,5 bis 10 Gew. %, bezogen auf die Monomeren, eines Ver-netzers hergestellt wird.

2. Verfahren nach Anspruch 1, **dadurch gekennzeichnet, dass** ein Polymerisat eingesetzt wird, das als Comonomer ausschließlich N-Vinylpyrrolidon oder N-Vinylcaprolactam oder eine Mischung von beiden einpolymerisiert enthält.

3. Verfahren nach Anspruch 1 oder 2, **dadurch gekennzeichnet, dass** ein Polymerisat eingesetzt wird, das als Vernetzter N,N'-Divinylethylenhamstoff einpolymerisiert enthält.

4. Verfahren nach einem der Ansprüche 1 bis 3, **dadurch gekennzeichnet, dass** ein Polyme-risat eingesetzt wird, das in Gegenwart eines Reduktionsmittels hergestellt wird.

5. Verfahren nach einem der Ansprüche 1 bis 4, **dadurch gekennzeichnet, dass** ein Polyme-risat eingesetzt wird, das in Gegenwart von Wasser bei 30 bis 150°C hergestellt worden ist.

6. Verfahren nach einem der Ansprüche 1 bis 5, **dadurch gekennzeichnet, dass** ein Polyme-risat eingesetzt wird, das ohne Lösungsmittel bei 100 bis 200°C hergestellt worden ist.

7. Verfahren nach einem der Ansprüche 1 bis 6, **dadurch gekennzeichnet, dass** die biologisch fermentierte Lösung ein Unfiltrat darstellt.

8. Verfahren nach einem der Ansprüche 1 bis 7, **dadurch gekennzeichnet, dass** das einge-setzte Polymer Bestandteil eines dynamischen oder statischen Filtrationsverfahrens ist.

9. Verfahren nach einem der Ansprüche 1 bis 8, **dadurch gekennzeichnet, dass** das einge-setzte Polymer auch in den vorgeschalteten Produktionsprozessen Wasseraufbereitung, Maischen, Würzebehandlung, und Gärung zum Einsatz kommt.

10. Verwendung eines Polymerisates, das 50-99,5 Gew.% N-Vinylimidazol und 0 bis 49,5 Gew.% eines anderen copolymerisierbaren Monomeren einpolymerisiert enthält und unter Ausschluß von Sauerstoff und von Polymerisationsinitiatoren sowie in Gegenwart von 0,5 bis 10 Gew. %, bezogen auf die Monomeren, eines Vernetzers hergestellt wird, zur Verbesserung der Geschmacksstabilität von fermentierten Lösungen, wobei als biologisch fermentierte Lösung Bier oder bierähnliche Getränke behandelt werden und die Behandlung zu einem Zeitpunkt durchgeführt wird, an dem die Aromenbildung noch stattfindet.

## Claims

1. A process for improving the flavor stability of biological fermented solutions, where as biologically fermented solution, beer or beer-like drinks are treated, which comprises treating the biologically fermented solution after the fermentation at a time point at which the aroma formation is still taking place, per 100 liter, with 1 to 3000 g of a polymer which comprises 50-99.5% by weight of N-vinylimidazole and 0 to 49.5% by weight of another copolymerizable monomer incorporated by polymerization and is produced in the absence of oxygen and polymerization initiators and also in the presence of 0.5 to 10% by weight, based on the monomers, of a crosslinker.

2. The process according to claim 1, wherein use is made of a polymer which, as comonomer, comprises exclusively N-vinylpyrrolidone or N-vinylcaprolactam or a mixture of the two incorporated by polymerization.

3. The process according to claim 1 or 2, wherein use is made of a polymer which, as crosslinker, comprises N,N'-divinylethyleneurea incorporated by polymerization.

4. The process according to one of claims 1 to 3, wherein use is made of a polymer which is produced in the presence of a reducing agent.

5. The process according to one of claims 1 to 4, wherein use is made of a polymer which was produced in the presence of water at 30 to 150°C.

6. The process according to one of claims 1 to 5, wherein use is made of a polymer which was produced without solvent at 100 to 200°C.

7. The process according to one of claims 1 to 6, wherein the biologically fermented solution is an unfiltered material.

8. The process according to one of claims 1 to 7, wherein the polymer used is a component of a dynamic or static filtration process.

9. The process according to one of claims 1 to 8, wherein the polymer used is also used in the upstream production processes water treatment, mashing, wort treatment and fermentation.

10. The use of a polymer which comprises 50-99.5% by weight of N-vinylimidazole and 0 to 49.5% by weight of another copolymerizable monomer incorporated by polymerization and is produced in the absence of oxygen and polymerization initiators and also in the presence of 0.5 to 10% by weight, based on the monomers, of a crosslinker, for improving the flavor stability of fermented solutions, where as biologically fermented solution, beer or beer-like drinks are treated and the treatment is carried out at a time point at which the aroma formation is still taking place.

## Revendications

1. Procédé pour l'amélioration de la stabilité du goût de solutions fermentées biologiques, dans lequel en tant que solution fermentée par voie biologique on traite de la bière ou des boissons de type bière, **caractérisé en ce qu'**après la fermentation on traite la solution fermentée par voie biologique, à un moment ou la formation d'arômes à encore lieu, par 1 à 3 000 g pour 100 litres d'un polymérisat qui contient incorporés par polymérisation 50-99,5 % en poids de N-vinylimidazole et 0 à 49,5 % en poids d'un autre monomère copolymérisable et est préparé avec exclusion d'oxygène et d'amorceurs de polymérisation ainsi qu'en présence de 0,5 à 10 % en poids, par rapport aux monomères, d'un agent de réticulation.

2. Procédé selon la revendication 1, **caractérisé en ce qu'**on utilise un polymérisat qui contient comme comonomère, incorporé(e) par polymérisation, exclusivement de la N-vinylpyrrolidone ou du N-vinyl-caprolactame ou un mélange des deux.

3. Procédé selon la revendication 1 ou 2, **caractérisé en ce qu'**on utilise un polymérisat qui contient comme agent de réticulation, incorporée par polymérisation, de la N,N'-divinyléthylène-urée.

4. Procédé selon l'une quelconque des revendications 1 à 3, **caractérisé en ce qu'**on utilise un polymérisat qui est préparé en présence d'un réducteur.

5. Procédé selon l'une quelconque des revendications 1 à 4, **caractérisé en ce qu'**on utilise un polymérisat qui a été préparé à 30 à 150 °C en présence d'eau.

6. Procédé selon l'une quelconque des revendications 1 à 5, **caractérisé en ce qu'**on utilise un polymérisat qui a été préparé à 100 à 200 °C sans solvant.

7. Procédé selon l'une quelconque des revendications 1 à 6, **caractérisé en ce que** la solution fermentée par voie biologique représente un produit non filtré.

8. Procédé selon l'une quelconque des revendications 1 à 7, **caractérisé en ce que** le polymère utilisé est un composant d'un procédé de filtration dynamique ou statique.

9. Procédé selon l'une quelconque des revendications 1 à 8, **caractérisé en ce que** le polymère utilisé est également utilisé dans les processus de production traitement de l'eau, maltage, aromatisation et fermentation, effectuée en amont.

10. Utilisation d'un polymérisat qui contient incorporés par polymérisation 50-99,5 % en poids de N-vinylimidazole et 0 à 49,5 % en poids d'un autre monomère copolymérisable et est préparé avec exclusion d'oxygène et d'amorceurs de polymérisation ainsi qu'en présence de 0,5 à 10 % en poids, par rapport aux monomères, d'un agent de réticulation, pour l'amélioration de la stabilité du goût de solutions fermentées, dans laquelle en tant que solution fermentée par voie biologique on traite de la bière ou des boissons de type bière et on effectue le traitement à un moment ou la formation d'arômes à encore lieu.
